# EUROPÄISCHE PATENTSCHRIFT

(11) **EP 2 798 313 B1**
(45) Veröffentlichungstag und Bekanntmachung des Hinweises auf die Patenterteilung: **13.03.2019**
(21) Anmeldenummer: 13824299.5
(22) Anmeldetag: 14.11.2013
(51) Int. Cl.: G01D 11/24

(54) **KONTAKTLOS ARBEITENDER SENSOR**
NON-CONTACT SENSOR
CAPTEUR SANS CONTACT

(30) Priorität: 28.01.2013 DE 102013201300; 27.02.2013 DE 102013203262
(43) Veröffentlichungstag der Anmeldung: 05.11.2014
(73) Patentinhaber: Micro-Epsilon Messtechnik GmbH & Co. KG, 94496 Ortenburg (DE)
(72) Erfinder: SCHMIDEDER, Sabine, 84329 Wurmannsquick (DE); HOENICKA, Reinhold, 94496 Ortenburg (DE); SCHALLMOSER, Guenter, 94099 Ruhstorf (DE)
(74) Vertreter: Patent- und Rechtsanwälte Ullrich & Naumann
(86) Internationale Anmeldenummer: PCT/DE2013/200302
(87) Internationale Veröffentlichungsnummer: WO 2014/114279

(56) Entgegenhaltungen:
- DE-A1- 10 314 875
- DE-A1-102008 006 833
- DE-A1-102008 043 764
- DE-A1-102011 008 171
- US-A- 4 898 035
- US-A- 5 186 055

## Beschreibung

Die Erfindung betrifft einen kontaktlos arbeitenden Sensor gemäß dem Oberbegriff des Anspruchs 1.

Wirbelstrom-Sensoren werden häufig in schwierigen Umgebungsbedingungen eingesetzt, weil sie durch das berührungslose Messprinzip und aufgrund der Unempfindlichkeit gegenüber äußeren Einflüssen dafür besonders geeignet sind. Besonders schwierig ist der Einsatz bei hohen Temperaturen, der hohe Ansprüche an die verwendeten Materialien stellt.

Bei hohen Temperaturen treten Effekte auf, die bei Raumtemperatur nicht berücksichtigt werden müssen.

Grundsätzlich soll der beanspruchte Sensor bei hohen Temperaturen zum Einsatz kommen können. Der Begriff "Hochtemperaturanwendung" wird in der Literatur häufig für Sensoren verwendet, die oberhalb des in der Industrie üblichen Temperaturbereichs von 85 °C eingesetzt werden. Oberhalb dieser Temperatur erstreckt sich bspw. der militärische Bereich (MIL-Bereich = 125 °C). Darüber können Sensoren mit integrierter Elektronik bis zu 200 / 225 °C eingesetzt werden. Ohne Elektronik lassen sich Sensoren bis zu 250 / 280 °C einsetzen, sofern dort organische Materialien enthalten sind. Der Hochtemperaturbereich, wie er hier von Bedeutung ist, geht deutlich über die zuvor genannten Bereiche hinaus, kann nämlich oberhalb 350 °C liegen, in Sonderfällen sogar bis über 1000 °C. Eine solche Anwendung ist nur durch Verwendung spezieller Materialien und unter Zugrundelegung einer besonderen Fertigungstechnik ohne Verguss und Vergussmaterialien möglich.

Eine bei Raumtemperatur unkritische Auswahl der Materialien ist bei Hochtemperatur-Anwendungen oft nicht möglich, da viele Materialien für den Hochtemperatur-Einsatz nicht geeignet sind. So wirken sich beispielsweise unterschiedliche Längenausdehnungskoeffizienten von Materialien, die miteinander kombiniert werden sollen, bei hohen Temperaturen negativ aus. Bei jeder Temperaturer- höhung wirkt sich die Längen- (bzw. Volumen-) -ausdehnung der verwendeten Werkstoffe aus. Sofern sich die Längenausdehnungskoeffizienten zu stark unterscheiden, kommt es an Verbindungsstellen unterschiedlicher Materialien zu hohen Spannungen aufgrund der unterschiedlichen Ausdehnung. Dies kann zu dauerhaften, plastischen Verformungen oder relativen Positionsänderungen von Sensorelement und Gehäuseteilen führen, was zu einem nicht deterministischen Verhalten des Sensors bei Temperaturänderung führen kann. Letztendlich können die auftretenden Spannungen so groß sein, dass die Verbindung aufbricht oder abreißt und zur Zerstörung des Sensors führt.

Neben den Anforderungen an mechanische Stabilität sind auch Änderungen der elektrischen Eigenschaften zu beachten. So sinkt z.B. bei Aluminiumoxid als keramisches Material der Isolationswiderstand von 10¹⁴ Ωcm bei Raumtemperatur auf 10¹⁰ Ωcm bei 400 °C.

Weiterhin sind auch chemische Eigenschaften zu beachten. Die Reaktivität von Stoffen steigt bei hohen Temperaturen stark an. Die Oxidation von Metallen durch Luftsauerstoff verstärkt sich bei hohen Temperaturen. Durch chemische Prozesse kann bei hohen Temperaturen auch Wasserstoff aus Feuchte freigesetzt werden, der zur Wasserstoffversprödung führt. Die Materialauswahl für Hochtemperaturanwendungen ist somit stark eingeschränkt.

Herkömmliche Zinn-Lötverbindungen sind z.B. nur bis ca. 300 °C geeignet, da darüber das verwendete Lot schmilzt und die Verbindung verloren geht.

Sensorelemente wie Spulen oder Elektroden bestehen üblicherweise aus Kupferdrähten oder -flächen mit Isolierungen. Kupferlegierungen neigen bei hohen Temperaturen zur Oxidation und Wasserstoff-Versprödung.

Bei höheren Temperaturen kommt es bei den üblicherweise für das Sensor-Gehäuse verwendeten Metallen wie Stahl oder Titan zu verstärkter Oxidation durch Luftsauerstoff oder zu Wasserstoff-Versprödung.

Häufig wird für Hochtemperatur-Sensoren eine Kombination aus Metall- und Keramikwerkstoffen verwendet. Das Gehäuse besteht dabei aus Metall, während die Keramik zur Isolation und zum Schutz der Messelemente dient. Allerdings ist eine direkte Verbindung bzw. der Einbau eines Keramik-Elementes in ein Metallgehäuse bei hohen Anwendungs-Temperaturen problematisch:
Die üblicherweise verwendeten Keramikwerkstoffe besitzen Ausdehnungskoeffizienten im Bereich von 4 bis 8 ppm/K. Nickelbasislegierungen oder allgemein hochlegierte NiCr-Stähle besitzen Ausdehnungskoeffizienten im Bereich 10 bis 16 ppm/K.

Die dabei auftretenden Spannungen können je nach Konstruktion des Sensors Druck- oder Zugspannungen sein. Im ungünstigen Fall kann ein Werkstoff, der eine hohe Druckspannung aufnehmen kann, unter Zug leicht reißen. Durch unterschiedliche Ausdehnungskoeffizienten kann es auch vorkommen, dass bei Temperaturerhöhung die Richtung der Spannung wechselt, so dass z.B. ein unter Druck belastetes Bauteil ab einer bestimmten Temperatur eine Zugbelastung erfährt.

Wird nun beispielsweise ein scheibenförmiges keramisches Sensorelement in ein rohrförmiges Metallgehäuse bei Raumtemperatur spannungsfrei eingesetzt, so entsteht bei Temperaturerhöhung aufgrund der Ausdehnung eine Zugspannung. Das umgebende Metallgehäuse dehnt sich stärker aus als das Keramikelement, wodurch sich der Innendurchmesser des rohrförmigen Metallgehäuses stärker vergrößert als der Außendurchmesser des Keramikelements. Dies kann dazu führen, dass das Keramikelement reißt oder sogar aus dem Gehäuse fällt. Der Grund liegt darin, dass derartige Keramiken zwar eine hohe Druckbelastung erlauben aber nur eine geringe Zug- oder Biegebelastung. Das Problem entsteht also dadurch, dass Materialien mit geringer Zug-, Druck- oder Biegebelastbarkeit mit Materialien hoher Druck-, Zug- oder Biegebelastbarkeit und unterschiedlichen Ausdehnungskoeffizienten miteinander kombiniert werden.

Ob auf die verwendeten Materialien dabei Zug-, Druck- oder Biegebelastungen wirken, hängt neben den reinen Materialparametern auch von der geometrischen Form, der Abfolge in der Konstruktion und von der Temperatur ab, bei der der Zusammenbau erfolgt.

Ein kontaktlos arbeitender Sensor gemäß dem Oberbegriff des Anspruchs 1 ist beispielsweise aus der US 4 898 035 A bekannt. Dabei weist der bekannte Sensor ein metallisches Gehäuse 22 und eine zumindest teilweise im Gehäuse 22 angeordnete, im Wesentlichen keramische Sensoreinheit 16 mit einem integrierten Messelement auf, wobei das Gehäuse 22 und die Sensoreinheit 16 unterschiedliche thermische Ausdehnungskoeffizienten aufweisen.

Des Weiteren ist aus der DE 10 2008 006 833 A1 ein kontaktlos arbeitender Sensor mit einem Gehäuse 12 und einer Sensoreinheit 14 bekannt, wobei zwischen dem Gehäuse und der Sensoreinheit mehrere nicht-leitende Isolatorelemente und Abschirmelemente angeordnet sind.

Die DE 10 2008 043 764 A1 zeigt einen Sensor mit einem Ausgleichselement 15 zur Kompensierung unterschiedlicher thermischer Ausdehnungskoeffizienten von Gehäuse 2 und Sensoreinheit 4. Das Ausgleichselement 15 ist als Block oder aus mehreren Scheiben oder Ringen aufgebaut.

Die DE 10 2011 008 171 A1 zeigt ebenfalls einen Sensor mit allen Merkmalen des Oberbegriffs des Anspruchs 1. Dabei ist ein Dichtungselement 30 als ausgleichendes Element genutzt, welches thermomechanische Spannungen aufnimmt oder verringert. Das Dichtungselement 30 ist topfförmig ausgebildet.

Die DE 103 14 875 A1 zeigt einen Sensor mit einem Stapel von Schichten 13, 14 mit unterschiedlichen Wärmeausdehnungskoeffizienten, um den Wärmeausdehnungskoeffizienten eines mikromechanischen Elements 12 an den Wärmeausdehnungskoeffizienten eines Gehäuses 11 anzupassen.

Des Weiteren zeigt die US 5 186 055 A einen Sensor mit einem Ausgleichselement mit Stützelementen 28, 32 und einem Stützflansch 42 zum Ausgleich unterschiedlicher thermischer Ausdehnungskoeffizienten eines Gehäuses und einer Sensoreinheit.

Der vorliegenden Erfindung liegt nun die Aufgabe zugrunde, die voranstehenden Nachteile zu beseitigen und einen Sensor der gattungsbildenden Art derart auszugestalten und weiterzubilden, dass dessen Werkstoffe und deren Kombination auch bei hohen Temperaturen eine gute Langzeitstabilität und ein deterministisches Verhalten bei Temperaturänderungen aufweisen.

Voranstehende Aufgabe ist durch die Merkmale des Patentanspruchs 1 gelöst.

Der Erfindung liegt die Verwendung geeigneter temperaturbeständiger Materialien mit aufeinander abgestimmten bzw. abgestuften Materialeigenschaften zugrunde. Um die im Stand der Technik bekannten Nachteile zu umgehen, ist erfindungsgemäß erkannt worden, dass eine geeignete, abgestufte Aneinanderreihung von Materialien mit unterschiedlichen Materialeigenschaften, beispielsweise unterschiedlichen mechanischen Belastbarkeiten, dazu führt, dass auch bei hohen Temperaturen die auftretenden mechanischen Spannungen innerhalb der Grenzbelastungen der verwendeten Materialien liegen.

Dies führt dazu, dass Sensoren bei hohen Temperaturen nicht beschädigt oder zerstört werden und ein deterministisches Verhalten bei Temperaturänderungen erreicht wird.

Als Gehäuse für einen derartigen Hochtemperatursensor wird ein Metallgehäuse verwendet. Besonders geeignet sind Nickelbasislegierungen, die eine gute Beständigkeit gegenüber Medien auch bei hohen Temperaturen besitzen, beispielsweise NiCr-Stähle, die unter dem Handelsnamen Inconel® (eingetragenes Warenzeichen der HUNTINGTON ALLOYS CORPORATION, USA) geführt werden.

Das Sensorelement dagegen besteht aus einem Keramik-Element, in das das eigentliche Messelement eingebettet ist. Keramik ist ebenfalls für hohe Temperaturen geeignet und ebenfalls chemisch beständig. Das Messelement kann bspw. eine Spule sein (induktiver Sensor oder Wirbelstromsensor) oder eine leitfähige Elektrode (kapazitiver Sensor). Das Sensorelement kann beispielsweise aus einer gewickelten Spule oder einer Metallelektrode in Verbindung mit einer keramischen Schutzfläche sein, wobei z.B. die Spule für hohe Temperaturen aus besonders temperaturbeständigen Werkstoffen besteht (wie z.B. Golddraht mit Glasisolierung oder Keramikisolierung).

Besonders vorteilhafte Sensorelemente bestehen aus einem keramischen Mehrschichtsubstrat (HTCC oder LTCC), wobei das Messelement (Spule oder Elektrode) zwischen den Keramikschichten eingebettet ist.

Ein für hohe Temperaturen geeigneter Sensor könnte beispielsweise derart aufgebaut werden, dass in ein Metallgehäuse aus Inconel zunächst ein Ausgleichselement eingefügt wird und daran anschließend das eigentliche Messelement. Für das Ausgleichselement könnte eine Keramik mit höherem Elastizitätsmodul oder höherer Bruchzahl, beispielsweise eine Nitrid-Keramik wie Shapal™ verwendet werden. Shapal™ (eingetragenes Warenzeichen der TOKUYAMA CORPORATION, Japan) ist eine Nicht-Oxid-Keramik aus den Hauptbestandteilen Aluminiumnitrid und Bornitrid. Derartige Keramiken besitzen Ausdehnungskoeffizienten im Bereich von 4 bis 5 ppm/K und eine relativ hohe Biegefestigkeit und Elastizitätsmodul. In das Ausgleichselement ist das Sensorelement integriert, das aus einem HTCC- oder LTCC-Keramiksystem besteht. In das Mehrschichtsubstrat ist in bekannter Weise ein Messelement, beispielsweise in Form einer mehrlagigen Spule eines Wirbelstromsensors, eingebettet.

Es gibt mehrere Möglichkeiten, diese drei Elemente zusammenzufügen. Werden diese bei Raumtemperatur zusammengefügt, entsteht durch das Metallgehäuse bei Temperaturerhöhung eine Zugspannung auf das Ausgleichselement und das Sensorelement. Werden die Elemente dagegen bei hohen Temperaturen gefügt, entsteht bei Raumtemperatur durch das Metallgehäuse eine Druckspannung auf die Keramikelemente. Das Ausgleichselement sorgt in beiden Fällen dafür, dass die Spannungen zwischen Gehäuse und Messelement aufgenommen wird, ohne dass es dabei mechanisch versagt. Die Verbindung von Metallgehäuse, Ausgleichselement und Sensorelement kann z.B. durch Aktivlöten (Hochtemperatur-Vakuumlöten) erfolgen. Da das Aktivlöten bei sehr hohen Temperaturen (ca. 800° bis 1100 °C) erfolgt, entsteht beim Abkühlen auf Raumtemperatur bzw. bei Betriebstemperatur des Sensors (die unterhalb der Löttemperatur liegen muss) im Wesentlichen eine Druckspannung auf das Ausgleichselement. Auch Hartlöten, thermisches Schrumpfen, Verglasen oder Reibschweißen der Elemente ist denkbar.

Neben den beschriebenen Kombinationen gibt es - je nach Anwendung - viele Möglichkeiten, den erfindungsgemäßen Sensor auszugestalten, indem geeignete, aufeinander abgestimmte Werkstoffkombinationen realisiert werden.

Das Ausgleichselement kann ebenso aus Metall bestehen, nämlich mit einem geeigneten thermischen Ausdehnungskoeffizienten Tₖ Bspw. könnte das Ausgleichselement aus Titan (Tₖ = 8,6 ppm) oder aus Zirkonium (Tₖ = 4,8 ppm) gefertigt werden.

Die Verwendung solcher Ausgleichselemente aus Metall ist jedoch problematisch, da Metalle mit geeignet abgestuften Tₖ nicht zur Hochtemperaturanwendung geeignet sind. Titan und Zirkon korrodieren bspw. im Temperaturbereich zwischen 550 °C und 600 °C. Folglich sind sie zu Hochtemperaturanwendungen nicht oder allenfalls bedingt geeignet.

Für Hochtemperaturanwendungen geeignete Metalle sind bspw. hochlegierte Nickelstähle. Diese haben jedoch einen kleinen Tₖ-Wert.

Alternativ kann das Ausgleichselement aus hochlegiertem Nickelstahl oder aus anderen hochtemperaturfesten Stählen hergestellt sein, nämlich dann, wenn anstelle eines angepassten Ausdehnungskoeffizienten Tₖ eine konstruktive Lösung für das Ausgleichselement gewählt wird, die entweder in Kombination mit einer die unterschiedlichen Ausdehnungskoeffizienten kompensierenden Materialeigenschaft oder isoliert einen mechanischen Ausgleich zwischen den im Temperaturverlauf unterschiedlich ausdehnenden Teilen herstellt. Das Ausgleichselement wirkt dabei weniger durch seine physikalischen Eigenschaften, vielmehr durch seine herstellungsbedingten - mechanischen - Eigenschaften, wodurch eine gewünschte Elastizität eingestellt wird.

Im Rahmen einer konkreten Ausgestaltung kann das Ausgleichselement besondere Ausgleichsmittel umfassen, bspw. an der Oberfläche ausgebildete Federzungen, die bei Temperaturänderungen die durch die unterschiedlichen Ausdehnungskoeffizienten der Materialien - Keramik-Sensorelement und Metallgehäuse - entstehende Spannung, nämlich Druck oder Zug, aufnehmen.

Die Ausgleichsmittel können in Form einer oder mehrerer Metallzungen gebildet sein. Diese lassen sich bspw. durch Drehen, Fräsen oder Erodieren oder durch andere geeignete Bearbeitungen herstellen. Das Sensorelement kann im Rahmen einer solchen Ausgestaltung in ein hülsenartiges Ausgleichselement eingepresst werden, so dass die dort vorgesehenen Ausgleichsmittel, bspw. in Form von Federelementen, auf Druck beansprucht werden. Dadurch wird gleichzeitig eine Abdichtung zwischen dem Ausgleichselement und der Keramik des Sensors hergestellt, so dass gleichzeitig eine hermetische Abdichtung des Sensors realisierbar ist.

Die Ausgleichsmittel können auf verschiedene Arten hergestellt und ausgestaltet werden, bspw. in Form von Federzungen oder eines Faltenbalgs. Der Faltenbalg kann durch eine geeignete Wahl von Metallwindungen bzw. Falten einen elastischen Ausgleich ermöglichen. Auch ist es denkbar, dass mehrere gewellte Metalllagen, ähnlich einer Tellerfeder, übereinander gelegt werden. Auch lässt sich eine Federhülse mit Federpassung herstellen, wonach die Federhülse bei der Montage durch Einpressen des Sensorelements auf Druck beansprucht wird.

Das Ausgleichselement kann auch als integraler Teil des Gehäuses ausgebildet sein, wonach die Ausgleichsmittel, bspw. das Federelement, aus dem Gehäuse herausgearbeitet werden.

Die zuvor genannten Lösungen müssen die notwendige Dichtigkeit gewährleisten, wonach ein durchgängiger Kontakt bzw. Kraftschluss zwischen dem Sensorelement, dem Ausgleichselement und dem Gehäuse sicherzustellen ist.

Zum Schutz bzw. Verschluss einer Nahtstelle am, neben oder beidseitig des Ausgleichselements, die zwischen dem Gehäuse und dem Sensorelement entstehen kann, ist es denkbar, eine elastische Abdeckung zu verwenden. Diese dient nicht nur zum Schutz gegen Eindringen von Staub, Wasser, Schmutz, etc., gewährleistet vielmehr auch eine hermetische Abdichtung gegenüber Druck und/oder Vakuum. Zur Realisierung einer solchen Abdeckung lassen sich alle handelsüblichen Vergussmassen, keramische Vergussmassen, Sintermaterialien oder aber auch Glasfritten zur Verglasung verwenden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht, teilweise geschnitten, einen nicht zur Erfindung gehörenden Sensor, ausgeführt als Hochtemperatur-Wirbelstromsensor,
- Fig. 2: in einer schematischen Ansicht, teilweise geschnitten, einen weiteren nicht zur Erfindung gehörenden Sensor, ausgeführt als Hochtemperatur -Wirbelstromsensor,
- Fig. 3: in einer schematischen Ansicht, teilweise geschnitten, einen weiteren nicht zur Erfindung gehörenden Sensor, ausgeführt als Hochtemperatur -Wirbelstromsensor,
- Fig. 4: in einer schematischen Ansicht, teilweise geschnitten, die grundsätzliche Anordnung eines nicht zur Erfindung gehörenden Sensors ohne Ausgleichselement, wonach bei Temperaturerhöhung die Verbindung zwischen den Bauteilen mit unterschiedlichen Ausdehnungskoeffizienten reißt bzw. aufbricht,
- Fig. 5a: in einer schematischen Ansicht, teilweise geschnitten, den nicht zur Erfindung gehörenden Gegenstand aus Fig. 4 mit Ausgleichselement, wobei das Ausgleichselement ein Halten der Verbindung gewährleistet,
- Fig. 5b: in einer schematischen Ansicht, teilweise geschnitten, den als Ausführungsbeispiel der vorliegenden Erfindung weitergebildeten Gegenstand aus Fig. 4 mit einem mechanisch wirkenden Ausgleichselement,
- Fig. 5c: in einer schematischen Ansicht, teilweise geschnitten, den als Ausführungsbeispiel der vorliegenden Erfindung weitergebildeten Gegenstand aus Fig. 4 mit sowohl dem Gehäuse als auch der Sensoreinheit zugeordneten mechanischen Ausgleichsmitteln,
- Fig. 5d: in einer schematischen Ansicht, teilweise geschnitten, den als Ausführungsbeispiel der vorliegenden Erfindung weitergebildeten Gegenstand aus Fig. 4 mit ausschließlich dem Gehäuse zugeordneten mechanischen Ausgleichsmitteln,
- Fig. 6a: in einer schematischen Ansicht, teilweise geschnitten, die Vorkehrung eines Ausgleichselements in Form einer Feder bzw. Federhülse gemäß einem weiteren Ausführungsbeispiel der vorliegenden Erfindung,
- Fig. 6b: in einer schematischen Ansicht, teilweise geschnitten, die nicht zur Erfindung gehörende Vorkehrung eines Ausgleichselements in Form eines aus dem Gehäuse herausgearbeiteten Federelements und
- Fig. 6c: in einer schematischen Ansicht, teilweise geschnitten, die nicht zur Erfindung gehörende Vorkehrung eines Ausgleichselements in Form eines aus dem Gehäuse herausgearbeiteten Federelements mit zusätzlicher elastischer Abdeckung.

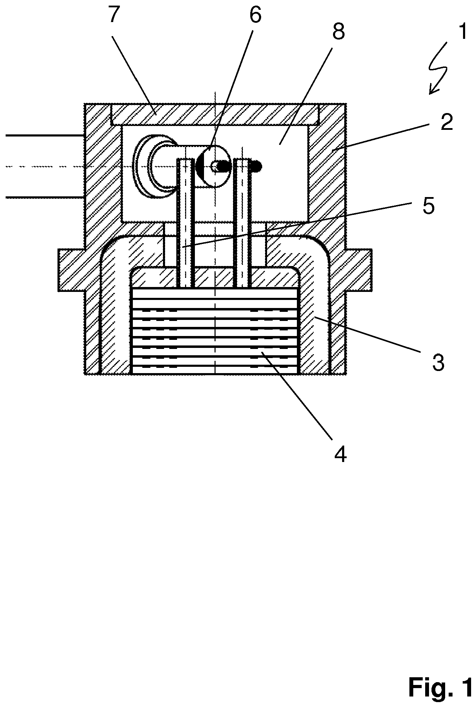

Figur 1 zeigt einen Sensor am Beispiel eines Hochtemperatur-Wirbelstromsensors 1.

Das Metallgehäuse 2 ist rotationssymmetrisch und besteht aus Inconel. Stirnseitig besitzt es eine Öffnung zur Aufnahme des Ausgleichselementes 3 und des Sensorelementes 4. Im Sensorelement 4 ist das eigentliche Messelement angeordnet. Das Messelement kann eine Spule (einlagig oder mehrlagig) sein oder eine (kapazitive) Messelektrode. Im konkreten Beispiel ist dies eine mehrlagige Spule, die in Mehrlagen-Keramik eingebettet ist. Die Messelektrode könnte auch auf der Oberseite (= Außenseite) des Sensorelementes angeordnet sein. Rückseitig ist es ebenfalls offen, damit die Kontaktierung des Sensorelementes erfolgen kann. In die stirnseitige Öffnung ist ein ebenfalls rotationssymmetrisches Ausgleichselement 3 aus Shapal™ eingefügt. In das Ausgleichselement ist dann das Sensorelement 4 aus LTCC-Keramik eingefügt. LTCC-Verbundsysteme besitzen einen Ausdehnungskoeffizienten von 5...6 ppm/K und haben eine relativ geringe Biegefestigkeit und Elastizitätsmodul. Würde man das Sensorelement 4 direkt mit dem Metallgehäuse 2 verbinden, würde aufgrund der Zug- bzw. Druckspannungen eine hohe Kraft auf das Sensorelement einwirken, die zum Bruch führt. Da das Ausgleichselement 3 jedoch eine relativ hohe Biege-, Druckfestigkeit und Elastizitätsmodul besitzt, kann es die entstehenden Spannungen aufnehmen, ohne dass es zum Bruch kommt. Das Ausgleichselement 3 isoliert sozusagen das Sensorelement 4 vom Metallgehäuse 2.

Das Sensorelement 4 wird rückseitig kontaktiert mit Kontaktstiften 5, die in das Keramikelement eingebracht sind. Auf diese Kontaktstifte 5 wird dann die Anschlussleitung 6 geschweißt. Nach dem Anschluss wird das Metallgehäuse 2 mit einer Abdeckung 7 verschlossen. Diese ist mit dem Metallgehäuse dicht verschweißt. Der Innenraum 8 des Sensors ist mit einem Schutzgas gefüllt oder evakuiert, um eine Korrosion der Anschlüsse (Kontaktstifte, Anschlussleitung etc.) zu verhindern. Die Anschussleitung 6 besteht aus einem hochtemperaturbeständigen Stahlmantelkabel mit mineralischer Isolierung. Der Stahlmantel der Anschlussleitung besteht ebenfalls aus Inconel und ist mit dem Metallgehäuse 2 dicht verschweißt. Die Anschlussleitung 6 kann einen koaxialen Aufbau haben. Der Innenleiter ist mit dem ersten Anschluss des Messelements verbunden. Der Außenleiter dient dann als zweiter Anschluss für das Messelement. Dadurch ist der Sensor jedoch nicht potentialfrei und sollte isoliert eingebaut werden. Einen potentialfreien Aufbau des Sensors erreicht man mit einem Triaxialkabel, das neben dem Außenmantel zwei Innenleiter besitzt, die mit dem Messelement verbunden sind.

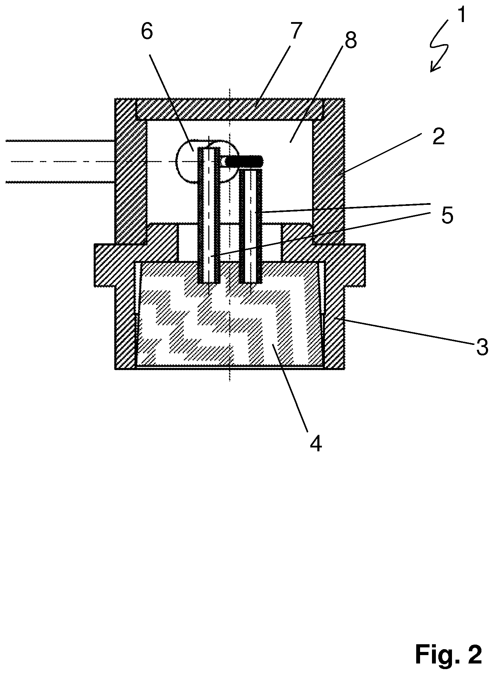

Figur 2 zeigt einen weiteren Sensor. Im Unterschied zum Wegsensor 1 aus Figur 1 erstreckt sich hier das Metallgehäuse 2 nicht bis zur Stirnseite des Sensors. Das Ausgleichselement 3 bildet im stirnseitigen Bereich das Gehäuse bzw. eine Verlängerung des Gehäuses. Das Ausgleichselement ist nur im hinteren Teil in das Metallgehäuse eingelassen, so dass ein ungeschirmter Sensor entsteht. Diese Ausführung hat den (messtechnischen) Vorteil, dass das Messelement im Sensorelement 4 nicht durch Metall vorbedämpft wird, wodurch ein größerer Messbereich erzielt wird.

Das Ausgleichselement dient im hinteren Bereich des Sensors analog zur Ausführung in Figur 1 dazu, das Sensorelement 4 vom Metallgehäuse 2 zu trennen, um die bereits beschriebenen Vorteile zu erreichen.

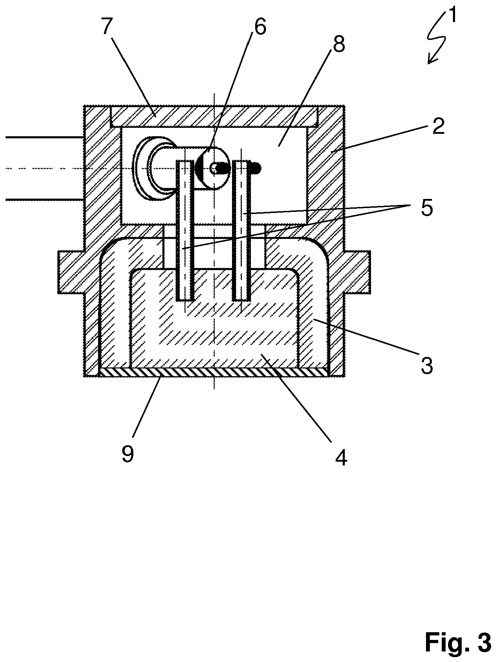

Gemäß der Darstellung in Figur 3 ist bei dem dort gezeigten Sensor stirnseitig eine Abdeckung 9 vorgesehen. Diese kann als dünne Metallplatte oder Metallfolie ausgeführt sein, die mit dem Metallgehäuse 2 verbunden ist, beispielsweise durch Schweißen oder Löten. Die Abdeckung könnte aber auch aus Keramik bestehen, beispielsweise aus Aluminiumoxid. Die Keramikabdeckung könnte auch durch Flammspritzen aufgebracht werden. Aluminiumoxid hat gegenüber Shapal oder auch den üblicherweise für LTCC oder HTTC verwendeten Keramiken eine höhere mechanische Festigkeit und eine höhere Abriebfestigkeit. Durch die Abdeckung 9 ist das Sensorelement zusätzlich geschützt.

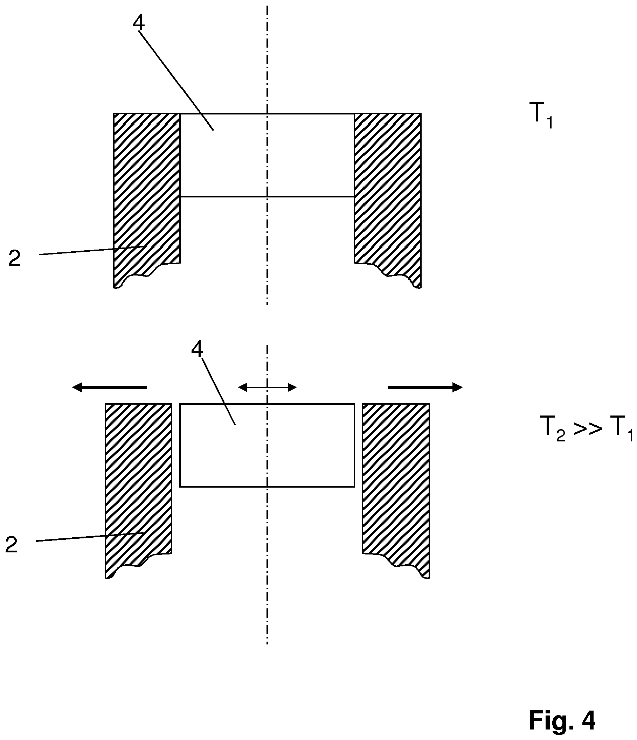

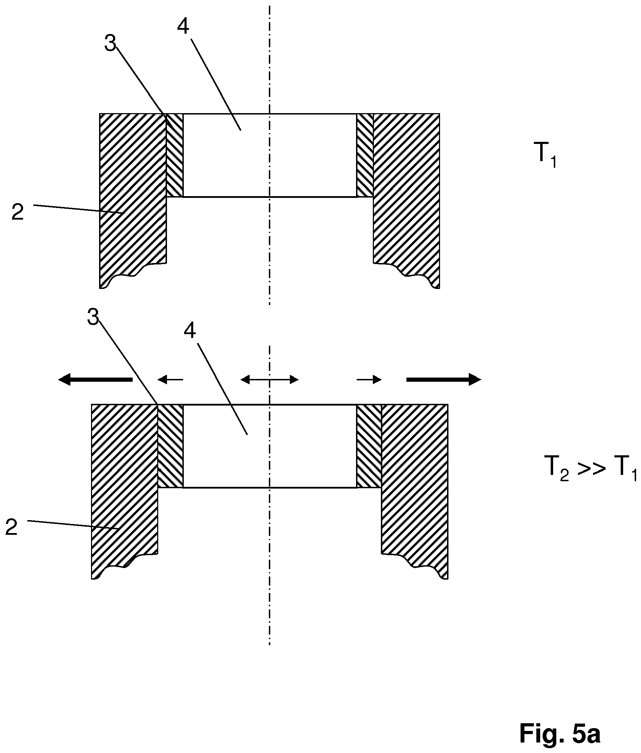

Die Fig. 4 und 5a bis 5d, wobei die Ausführung gemäß Fig. 5a nicht zur Erfindung gehört, verdeutlichen das erfindungsgemäße Prinzip, wobei Fig. 4 eine herkömmliche Sensoranordnung zeigt, nämlich ohne Vorkehrung eines Ausgleichselements mit den unterschiedlichen Ausdehnungskoeffizienten kompensierender Materialeigenschaft bzw. konpensierenden Materialeigenschaften.

Gemäß der Darstellung in Fig. 4 sind bei Temperatur T1 Gehäuse 2 und Senoreinheit 4 fest miteinander verbunden. Bei Temperaturerhöhung auf T2, wobei T2 > T1 ist, dehnen sich das Gehäuse 2 und die Sensoreinheit 4 unterschiedlich aus, genauer gesagt dehnt sich das Gehäuse 2 stärker aus als die Sensoreinheit 4. Dadurch wird der Innendurchmesser der Sensoreinheit 4 größer als der Außendurchmesser des Gehäuses 2, so dass die Verbindung abreißt bzw. bricht.

Entsprechend der Darstellung in Fig. 5a ist ein Ausgleichselement 3 vorgesehen, welches derartige mechanische Eigenschaften hat, dass es bei Temperaturänderung T1 auf T2 die unterschiedliche Ausdehnung zwischen Gehäuse 2 und Sensoreinheit 4 ausgleichen bzw. kompensieren kann. Die Pfeile in Fig. 5a symbolisieren die Ausdehnung.

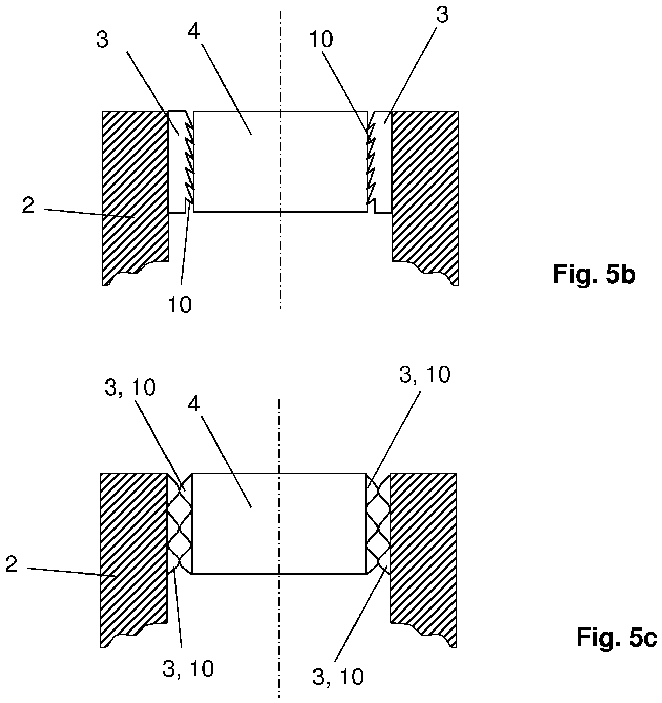

Fig. 5b zeigt die Vorkehrung eines besonderen Ausgleichselements 3, welches Maßnahmen zum mechanischen Ausgleich unterschiedlicher Ausdehnungskoeffizienten aufweist, nämlich besondere Ausgleichsmittel 10 in Form von Federzungen bzw. sägezahnähnlichen Federelementen. Die dort vorgesehenen Ausgleichsmittel 10 sind geeignet, die durch die unterschiedlichen Ausdehnungskoeffizienten zwischen dem Gehäuse 2 und der Sensoreinheit 4 auftretenden Spannungen aufzunehmen bzw. zu kompensieren. Die Ausgleichsmittel 10 können durch Drehen, Fräsen, Erodieren, etc. hergestellt werden.

Fig. 5c zeigt die Vorkehrung eines besonderen Ausgleichselements 3, welches Ausgleichsmittel 10 in Form eines Faltenbalgs aufweist. Der Faltenbalg ist zwischen dem Gehäuse 2 und der Sensoreinheit 4 eingeklemmt. Auch könnte es sich dabei um gewellte Metalllagen ähnlich einer Tellerfeder handeln.

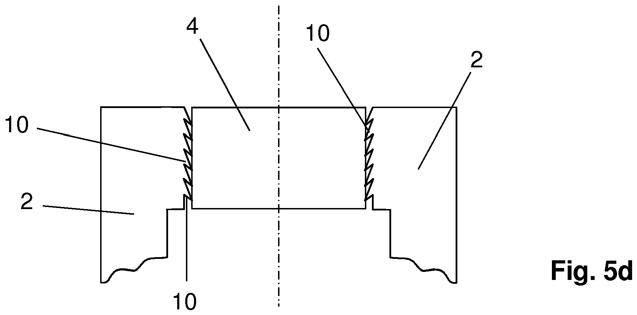

Bei dem Ausführungsbeispiel gemäß Fig. 5d weist das Gehäuse 2 die Ausgleichsmittel 10 auf, wonach diese nämlich als Federelemente aus dem Material des Gehäuses 2 herausgearbeitet sind. Gleichzeitig kann eine klemmende und/oder dichtende Wirkung erzielt werden.

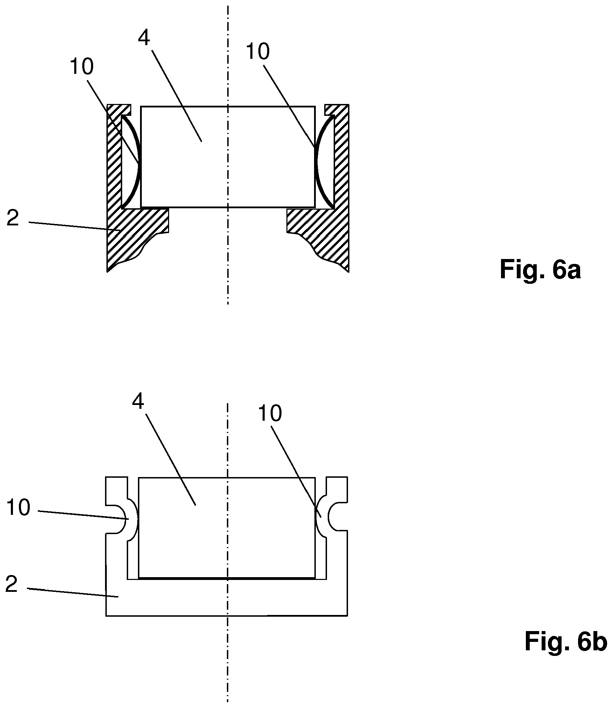

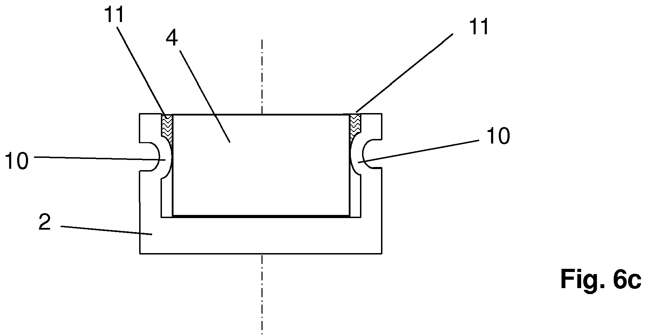

Die Figuren 6a bis 6c zeigen weitere Varianten von Ausgleichsmitteln 10, wobei die Ausgleichsmittel 10 im Sinne einer Federhülse (Fig. 6a) oder integral am Gehäuse 2 (Fig. 6b) - nicht zur Erfindung gehörend - ausgeführt sein können. Gemäß der Variante in Fig. 6c - nicht zur Erfindung gehörend - ist zusätzlich eine elastische Abdeckung 11 vorgesehen, die einen Schutz gegen das Eindringen von Staub, Wasser und Schmutz sowie eine hermetische Abdichtung gegenüber Druck oder Vakuum schafft. Die Abdeckung 11 kann aus handelsüblichen Vergussmassen, aus keramischen Vergussmassen, Sintermaterial oder auch als Verglasung ausgeführt sein.

Folgende Anwendungen des erfindungsgemäßen Sensors sind denkbar:
Abstands- Positionsmessungen bei
- Metallerzeugung/Verarbeitung (Gießerei, Walzwerk)
- Verbrennungsmotoren

Tip & Time-Clearance bei Turbinen (Turbinen können Abgas-Turbolader, Gas- oder Dampfturbinen, Flugzeugmotore, Verdichter, auch Turbomolekularpumpen etc. sein):
- Tip: Spaltmessung in der Turbine, Spalt ist verantwortlich für Wirkungsgrad: Je geringer der Spalt, umso höher der Wirkungsgrad. Spalt Null birgt jedoch die Gefahr der Berührung und damit der Zerstörung. Spalt ändert sich auch während des Betriebes aufgrund von Fliehkräften und aufgrund von thermischer Längenausdehnung.
- Time: Im Prinzip handelt es sich hier um eine Zeitmessung bzw. Schaufeldetektion: Mit mehreren Sensoren am Umfang einer Turbine wird der Zeitpunkt erfasst, wenn eine Schaufel am Sensor vorbeistreicht. Flattern bzw. Schwingen der Schaufeln führt dazu, dass nicht alle Schaufelsignale synchron erfolgen, sondern es kann eine oder mehrere Schaufeln minimal früher oder später am Sensor vorbeistreichen als eine andere. Durch diese Messung können ungünstige Betriebszustände der Turbine erkannt werden, weil durch die Schwingungen die Gefahr besteht, dass die Turbine beschädigt wird (Resonanzkatastrophe).

Hinsichtlich weiterer vorteilhafter Ausgestaltungen des erfindungsgemäßen Sensors wird zur Vermeidung von Wiederholungen auf den allgemeinen Teil der Beschreibung sowie auf die beigefügten Patentansprüche verwiesen.

## Patentansprüche

1. Kontaktlos arbeitender Sensor, mit einem metallischen Gehäuse (2) und einer zumindest teilweise im Gehäuse (2) angeordneten, im Wesentlichen keramischen Sensoreinheit (4) mit integriertem Messelement, wobei das Gehäuse (2) und die Sensoreinheit (4) unterschiedliche thermische Ausdehnungskoeffizienten haben, wobei zwischen dem Gehäuse (2) und der Sensoreinheit (4) mindestens ein Ausgleichselement (3) vorgesehen ist, welches eine die unterschiedlichen Ausdehnungskoeffizienten kompensierende Geometrie hat,
**dadurch gekennzeichnet, dass** das Ausgleichselement (3) Ausgleichsmittel (10) in Form von sägezahnähnlichen Federelementen, in Form eines Faltenbalgs oder in Form einer Federhülse aufweist.

2. Sensor nach Anspruch 1, **dadurch gekennzeichnet, dass** der thermische Ausdehnungskoeffizient des Ausgleichselements (3) zwischen dem Ausdehnungskoeffizienten des Gehäuses (2) und dem der Sensoreinheit (4) liegt.

3. Sensor nach Anspruch 1 oder 2, **dadurch gekennzeichnet, dass** die mechanischen Eigenschaften des Ausgleichselements (3), insbesondere der Elastizitätsmodul und/oder die Bruchfestigkeit, zwischen den jeweiligen Werten des Gehäuses (2) und der Sensoreinheit (4) liegen.

4. Sensor nach einem der Ansprüche 1 bis 3, **dadurch gekennzeichnet, dass** das Gehäuse (2) aus einer Nickellegierung besteht, vorzugsweise aus einem NiCr-Stahl.

5. Sensor nach einem der Ansprüche 1 bis 4, **dadurch gekennzeichnet, dass** das Messelement als Spule, ggf. als gewickelte Spule, oder als Elektrode ausgeführt ist und ggf. eine keramische Isolierung oder eine Isolierung aus Glas aufweist.

6. Sensor nach einem der Ansprüche 1 bis 5, **dadurch gekennzeichnet, dass** die Sensoreinheit (4) als keramisches Mehrschichtsubstrat mit eingebettetem Messelement ausgeführt ist.

7. Sensor nach einem der Ansprüche 1 bis 6, **dadurch gekennzeichnet, dass** das Ausgleichselement (3) aus Keramik mit einem größeren thermischen Ausdehnungskoeffizienten als die Sensoreinheit (4) besteht, beispielsweise aus einer Nicht-Oxid-Keramik, vorzugsweise aus einer Nitrid-Keramik.

8. Sensor nach Anspruch 7, **dadurch gekennzeichnet, dass** das Ausgleichselement (3) aus Keramik mit einem kleineren thermischen Ausdehnungskoeffizienten als das Gehäuse (2) besteht.

9. Sensor nach einem der Ansprüche 1 bis 6, **dadurch gekennzeichnet, dass** das Ausgleichselement (3) aus Metall mit einem kleineren thermischen Ausdehnungskoeffizienten als das Gehäuse (2) besteht.

10. Sensor nach einem der Ansprüche 1 bis 6 und ggf. nach Anspruch 9, **dadurch gekennzeichnet, dass** das Ausgleichselement (3) aus Metall besteht und auf der dem Gehäuse (2) und/oder der Sensoreinheit (4) zugewandten Seite Ausgleichsmittel (10) zum mechanischen, insbesondere elastischen Spannungsausgleich aufweist.

11. Sensor nach einem der Ansprüche 1 bis 10, **dadurch gekennzeichnet, dass** das Ausgleichselement (3) jedweden direkten Kontakt der Sensoreinheit (4) mit dem Gehäuse (2) unterbindet.

12. Sensor nach einem der Ansprüche 1 bis 11, **dadurch gekennzeichnet, dass** das Ausgleichselement (3) als Einsteckteil passgenau in das Gehäuse (2) passt, und dass die Sensoreinheit (4) komplett im Ausgleichselement sitzt.

13. Sensor nach einem der Ansprüche 1 bis 12, **dadurch gekennzeichnet, dass** das Ausgleichselement (3) mit einem Einsteckbereich in das Gehäuse (2) eingesetzt ist und mit einem herausragenden Bereich das Gehäuse (2) verlängert, wobei die Sensoreinheit (4) in dem herausragenden Bereich sitzt.

14. Sensor nach einem der Ansprüche 1 bis 13, **dadurch gekennzeichnet, dass** messseitig eine Abdeckung (9) vorgesehen ist, die endseitig im Gehäuse (2) oder in dem Ausgleichselement (3) sitzt.

## Claims

1. Sensor which operates contactlessly, having a metal housing (2) and a substantially ceramic sensor unit (4) which is arranged at least partially in the housing (2) with an integrated measuring element, wherein the housing (2) and the sensor unit (4) have different thermal expansion coefficients, wherein between the housing (2) and the sensor unit (4) there is provided at least one compensation element (3) which has a geometry which compensates for the different expansion coefficients,
**characterised in that** the compensation element (3) has compensation means (10) in the form of saw-tooth-like resilient elements, in the form of a bellows or in the form of a resilient sleeve.

2. Sensor according to claim 1, **characterised in that** the thermal expansion coefficient of the compensation element (3) is located between the expansion coefficient of the housing (2) and that of the sensor unit (4).

3. Sensor according to claim 1 or 2, **characterised in that** the mechanical properties of the compensation element (3), in particular the modulus of elasticity and/or the breaking resistance, are located between the respective values of the housing (2) and the sensor unit (4).

4. Sensor according to any one of claims 1 to 3, **characterised in that** the housing (2) comprises a nickel alloy, preferably of NiCr steel.

5. Sensor according to any one of claims 1 to 4, **characterised in that** the measuring element is constructed as a coil, where applicable as a wound coil, or as an electrode and where applicable has a ceramic insulation or an insulation of glass.

6. Sensor according to any one of claims 1 to 5, **characterised in that** the sensor unit (4) is constructed as a ceramic multi-layer substrate with an embedded measuring element.

7. Sensor according to any one of claims 1 to 6, **characterised in that** the compensation element (3) comprises ceramic material with a greater thermal expansion coefficient than the sensor unit (4), for example, a non-oxide ceramic material, preferably a nitride ceramic material.

8. Sensor according to claim 7, **characterised in that** the compensation element (3) comprises ceramic material with a smaller thermal expansion coefficient than the housing (2).

9. Sensor according to any one of claims 1 to 6, **characterised in that** the compensation element (3) comprises metal with a smaller thermal expansion coefficient than the housing (2).

10. Sensor according to any one of claims 1 to 6 and where applicable according to claim 9, **characterised in that** the compensation element (3) comprises metal and has at the side facing the housing (2) and/or the sensor unit (4) compensation means (10) for mechanical, in particular resilient, tension compensation.

11. Sensor according to any one of claims 1 to 10, **characterised in that** the compensation element (3) prevents any direct contact of the sensor unit (4) with the housing (2) .

12. Sensor according to any one of claims 1 to 11, **characterised in that** the compensation element (3) fits precisely as an insertion component in the housing (2) and **in that** the sensor unit (4) is located completely in the compensation element.

13. Sensor according to any one of claims 1 to 12, **characterised in that** the compensation element (3) is inserted with an insertion region into the housing (2) and extends the housing (2) with a protruding region, wherein the sensor unit (4) is located in the protruding region.

14. Sensor according to any one of claims 1 to 13, **characterised in that** there is provided at the measurement side a cover (9) which is located at the end side in the housing (2) or in the compensation element (3).

## Revendications

1. Capteur sans contact, avec un boîtier (2) métallique et une unité de capteur (4) essentiellement céramique, avec élément de mesure intégré, disposée au moins partiellement dans le boîtier (2), le boîtier (2) et l'unité de capteur (4) ayant des coefficients de dilatation thermique différents, au moins un élément de compensation (3) étant prévu entre le boîtier (2) et l'unité de capteur (4), lequel a une géométrie qui compense les différents coefficients de dilatation, **caractérisé en ce que** l'élément de compensation (3) comporte des moyens de compensation (10) sous forme d'éléments élastiques semblables à des dents de scie, sous forme d'un soufflet ou sous forme d'une douille élastique.

2. Capteur selon la revendication 1, **caractérisé en ce que** le coefficient de dilatation thermique de l'élément de compensation (3) se situe entre le coefficient de dilatation du boîtier (2) et celui de l'unité de capteur (4).

3. Capteur selon la revendication 1 ou 2, **caractérisé en ce que** les caractéristiques mécaniques de l'élément de compensation (3), en particulier le module d'élasticité et/ou la résistance à la rupture, se situent entre les valeurs respectives du boîtier (2) et de l'unité de capteur (4).

4. Capteur selon l'une des revendications 1 à 3, **caractérisé en ce que** le boîtier (2) se compose d'un alliage de nickel, de préférence d'un acier NiCr.

5. Capteur selon l'une des revendications 1 à 4, **caractérisé en ce que** l'élément de mesure est réalisé en tant que bobine, éventuellement en tant que bobine enroulée, ou en tant qu'électrode, et comporte éventuellement une isolation céramique ou une isolation en verre.

6. Capteur selon l'une des revendications 1 à 5, **caractérisé en ce que** l'unité de capteur (4) est réalisée en tant que substrat multicouche céramique dans lequel l'élément de mesure est noyé.

7. Capteur selon l'une des revendications 1 à 6, **caractérisé en ce que** l'élément de compensation (3) se compose de céramique ayant un coefficient de dilatation thermique plus élevé que l'unité de capteur (4), par exemple d'une céramique non oxydée, de préférence d'une céramique au nitrure.

8. Capteur selon la revendication 7, **caractérisé en ce que** l'élément de compensation (3) se compose d'une céramique ayant un coefficient de dilatation thermique plus faible que le boîtier (2).

9. Capteur selon l'une des revendications 1 à 6, **caractérisé en ce que** l'élément de compensation (3) se compose de métal ayant un coefficient de dilatation thermique plus faible que le boîtier (2).

10. Capteur selon l'une des revendications 1 à 6 et éventuellement selon la revendication 9, **caractérisé en ce que** l'élément de compensation (3) se compose de métal et comporte, sur le côté tourné vers le boîtier (2) et/ou vers l'unité de capteur (4), des moyens de compensation (10) destinés à la compensation de tension mécanique, en particulier élastique.

11. Capteur selon l'une des revendications 1 à 10, **caractérisé en ce que** l'élément de compensation (3) empêche tout contact direct de l'unité de capteur (4) avec le boîtier (2).

12. Capteur selon l'une des revendications 1 à 11, **caractérisé en ce que** l'élément de compensation (3) s'adapte en tant que partie enfichable de façon ajustée dans le boîtier (2), et **en ce que** l'unité de capteur (4) repose complètement dans l'élément de compensation.

13. Capteur selon l'une des revendications 1 à 12, **caractérisé en ce que**, avec une zone d'insertion, l'élément de compensation (3) est introduit dans le boîtier (2) et prolonge le boîtier (2) avec une zone qui dépasse, l'unité de capteur (4) reposant dans la zone qui dépasse.

14. Capteur selon l'une des revendications 1 à 13, **caractérisé en ce que**, côté mesure, il est prévu un recouvrement (9) qui repose côté extrémité dans le boîtier (2) ou dans l'élément de compensation (3).
